Europäisches Patentamt

European Patent Office

Office européen des brevets

(19)

(11) EP 1 227 942 B1

(12) FASCICULE DE BREVET EUROPEEN

(45) Date de publication et mention
de la délivrance du brevet:
**10.03.2004 Bulletin 2004/11**

(51) Int Cl.⁷: **B60C 17/04**, B60C 19/00,
G10K 11/178

(21) Numéro de dépôt: 00967827.7

(22) Date de dépôt: **29.09.2000**

(86) Numéro de dépôt international:
**PCT/EP2000/009551**

(87) Numéro de publication internationale:
**WO 2001/023195 (05.04.2001 Gazette 2001/14)**

(54) **APPUI DE SECURITE AVEC ATTENUATEUR DE BRUIT POUR ROUE DE VEHICULE**

NOTLAUFSTÜTZKÖRPER MIT GERÄUSCHREDUZIERENDER VORRICHTUNG FÜR FAHRZEUGRAD

SAFETY SUPPORT WITH NOISE SUPPRESSOR FOR VEHICLE WHEEL

(84) Etats contractants désignés:
**AT BE CH CY DE DK ES FI FR GB GR IE IT LI LU MC NL PT SE**

(30) Priorité: **29.09.1999 FR 9912269**

(43) Date de publication de la demande:
**07.08.2002 Bulletin 2002/32**

(73) Titulaires:
• **Sociéte de Technologie Michelin**
  **63000 Clermont-Ferrand Cedex 09 (FR)**
• **MICHELIN RECHERCHE ET TECHNIQUE S.A.**
  **CH-1763 Granges-Paccot (CH)**

(72) Inventeurs:
• **FLAMENT, Julien**
  **F-63000 Clermont-Ferrand (FR)**

• **JUBERT, Denis**
  **F-63100 Clermont-Ferrand (FR)**

(74) Mandataire: **Dequire, Philippe Jean-Marie Denis**
**Michelin & Cie,**
**Service SGD/LG/PI-LAD**
**63040 Clermont Ferrand Cedex 9 (FR)**

(56) Documents cités:
**EP-A- 0 663 306**          **EP-A- 0 796 747**
**WO-A-98/35843**          **DE-A- 19 801 570**
**FR-A- 1 470 895**          **US-A- 5 891 278**

• **PATENT ABSTRACTS OF JAPAN vol. 1995, no. 04, 31 mai 1995 (1995-05-31) & JP 07 017222 A (BRIDGESTONE CORP), 20 janvier 1995 (1995-01-20)**

## Description

La présente invention concerne un appui de sécurité pour roue de véhicule avec pneumatique, comportant au moins un atténuateur de bruit du type résonateur de Helmholtz ou résonateur quart d'onde.

Les appuis de sécurité pour roue de véhicule utilisant un pneumatique sont bien connus. Le document EP 0 796 747 décrit un exemple d'un tel appui, qui correspond au préambule de la revendication 14. Celuici consiste en un corps circulaire adapté pour montage sur une jante d'un véhicule. L'exemple illustré dans ce document est fait principalement d'un mélange de caoutchouc vulcanisé dont certaines zones sont renforcées, par exemple avec des filaments de type métalliques ou textiles. Bien sûr, d'autres matériaux peuvent être utilisés pour réaliser un tel appui.

De façon générale, les appuis de sécurité sont montés sur une jante, à l'intérieur d'un pneumatique, afin de procurer un appui pour le sommet du pneumatique lors d'un roulage à faible pression, voire à pression nulle, suite à une crevaison par exemple. On évite ainsi le contact direct entre le pneumatique et la jante, qui cause en général une détérioration quasi-instantanée du pneumatique. Les appuis permettent donc d'améliorer la sécurité du véhicule en permettant le roulage pendant un certain temps. Ce temps peut par ailleurs être bénéfique pour trouver un site de dépannage.

D'autre part, on connaît les effets causés par la résonance acoustique de l'air contenue dans un pneumatique. Par exemple, le premier mode cavité (parfois désigné PMC) est un phénomène bien connu, mais son atténuation ou sa suppression cause toujours de nombreuses difficultés. La fréquence naturelle (ou fréquence de résonance) d'une roue est une fonction directe de sa circonférence : une longueur d'onde correspond ainsi à la circonférence de la roue. Une roue plus grande implique une plus grande longueur d'onde, donc une fréquence naturelle moins élevée. A titre d'exemple, notons qu'une roue de diamètre de 15" comporte une fréquence naturelle autour de 230 Hz. L'énergie acoustique due à la fréquence de résonance est en majeure partie transmis de manière solidienne : ce mode de propagation implique que les vibrations causées par l'air en présence dans la cavité du pneumatique sont transmises à la roue, puis aux organes de support et de transmission pour aboutir finalement vers l'habitacle, où les occupants subissent le bruit transmis.

Il existe certains moyens pour tenter de remédier à cette situation. Un tel moyen est décrit dans le document WO 98/35843, qui correspond au préambule de la revendication 1. Selon ce document, des résonateurs quart d'onde sont prévus dans un support spécialement conçu, ajouté à la roue, notamment par un montage du support sur la jante. Ce dispositif nécessite la présence d'un support spécifique. Il s'agit donc d'une pièce additionnelle, nécessitant matériaux et temps de fabrication donc un surcoût d'une part, et ajoutant une masse supplémentaire à la roue d'autre part.

Selon une variante de réalisation décrite dans ce même document, les résonateurs sont prévus dans la jante. Une telle jante doit cependant subir d'importantes modifications afin d'y incorporer les résonateurs.

La présente invention vise à pallier ces différents inconvénients, notamment à supprimer les résonances acoustiques dues à la présence d'air (ou autre gaz) dans la cavité ou tout au moins à atténuer leur amplitude.

Pour ce faire, selon un premier aspect de l'invention, il est prévu une roue pour véhicule, comportant une jante, un disque, un pneumatique définissant avec la jante une cavité C circonférentielle, et au moins un résonateur adapté pour diminuer l'amplitude ou supprimer une résonance naturelle de la dite cavité, ladite roue comprenant également un appui de sécurité, pour supporter par l'intérieur la bande de roulement de ce pneumatique en cas de perte de pression de gonflage, ledit appui procurant au moins une des parois dudit résonateur.

Cet agencement, où l'appui forme au moins une des parois d'un résonateur, permet en outre l'atténuation de l'amplitude, voire la suppression, d'une ou plusieurs résonances naturelles de la cavité, notamment du premier mode cavité. Les résonateurs, placés de façon à être en communication avec la cavité C et s'ils sont accordés à la fréquence ou la plage de fréquences sur lesquelles on souhaite agir, permettent la dissipation de l'énergie de vibration. On peut de la sorte minimiser ou éliminer les remontées vibratoires ou sonores dans l'habitacle via la roue.

De manière avantageuse, chaque résonateur est constitué d'une cavité c, occupant un volume V en communication fluidique avec ladite cavité C. Ladite communication fluidique est avantageusement assurée par au moins une ouverture.

Selon une variante avantageuse, le résonateur est disposé dans l'appui. Dans un tel agencement, les parois de la cavité d'un résonateur peuvent être constituées par des portions de l'appui. Les parois de l'appui forment avantageusement toutes les parois d'un résonateur.

Selon une autre variante avantageuse, ledit résonateur est disposé adjacent à l'appui. Dans une tel agencement, les parois de la cavité d'un résonateur peuvent être constituées par des portions de l'appui et des portions de jante.

Un tel appui est particulièrement avantageux puisqu'il évite d'utiliser un support additionnel uniquement pour loger les résonateurs. On évite ainsi le surpoids additionnel occasionné par ces supports. D'autre part, pour assurer l'intégration des résonateurs, il n'y a pas lieu de modifier la jante de façon importante ni le pneumatique.

Selon une forme d'exécution avantageuse, le ou les résonateurs sont des résonateurs de Helmholtz.

Il s'agit d'un type de résonateur simple à réaliser et procurant des résultats très satisfaisants. La calibration de ce type de résonateur est simple et précise. Il permet par ailleurs l'utilisation avantageuse sans réelle modification d'un appui de sécurité de type connu, tel que décrit ultérieurement.

De manière avantageuse, l'ouverture d'un résonateur de type Helmholtz est de diamètre et de longueur calibrés. Le volume V et les dimensions calibrées de l'ouverture sont déterminés de façon à atténuer l'amplitude ou supprimer au moins une résonance acoustique de l'air contenu dans la cavité C du pneu, correspondant sensiblement à une fréquence ou à une plage de fréquences données.

Les cavités des résonateurs de Helmholtz sont en général de dimension relativement petite par rapport à la longueur d'onde.

Selon une autre forme d'exécution avantageuse, le ou les résonateurs sont des résonateurs quart d'onde.

Il s'agit également d'un type de résonateur simple à réaliser et procurant des résultats très satisfaisants. Son dimensionnement est particulièrement aisé à réaliser puisqu'il s'agit notamment de prévoir une longueur de cavité sensiblement correspondante au quart de la longueur d'onde sur laquelle on souhaite agir. Plusieurs résonateurs peuvent avoir des longueurs correspondant au quart de plusieurs longueurs d'ondes différentes. Il permet par ailleurs l'utilisation avantageuse sans réelle modification d'un appui de sécurité de type connu, tel que décrit ultérieurement.

Selon un autre aspect, l'invention concerne également un appui de sécurité destiné à être monté sur une jante d'une roue pour véhicule à l'intérieur d'un pneumatique, pour supporter par l'intérieur la bande de roulement de ce pneumatique en cas de perte de pression de gonflage, ledit pneumatique définissant avec la jante une cavité C, ledit appui servant à fournir au moins une des parois d'un résonateur adapté pour atténuer l'amplitude ou supprimer une résonance naturelle de la dite cavité.

Un tel appui est particulièrement avantageux puisqu'il évite d'utiliser un support additionnel uniquement pour loger les résonateurs. On évite ainsi le surpoids additionnel occasionné par ces supports. D'autre part, pour assurer l'intégration des résonateurs, il n'y a pas lieu de modifier la jante de façon importante ni le pneumatique.

La ou les ouvertures de cavités sont avantageusement constituées d'un tube.

La calibration de tels tubes est plus simple à réaliser, plus précise et moins coûteuse que la calibration directe des ouvertures des parois.

Selon une variante avantageuse de l'invention, l'appui de sécurité comporte:

-    une base sensiblement cylindrique destinée à s'adapter autour de la jante,

-    un sommet sensiblement cylindrique destiné à entrer en contact avec la bande de roulement en cas de perte de pression, et laissant une garde par rapport à celle-ci à la pression nominale, et un corps annulaire reliant ladite base et ledit sommet, ladite base, ledit sommet et ledit corps annulaire définissant une pluralité de cavités c adaptées pour être reliées directement ou indirectement avec la cavité C par au moins une ouverture. Ledit corps peut comporter deux parois latérales annulaires reliées par une pluralité de cloisons d'orientations sensiblement axiales, lesdites parois et cloisons définissant avec la base et le sommet lesdites cavités c. Lesdites cloisons peuvent être régulièrement réparties sur la circonférence.

Avantageusement, certaines des cavités sont reliées entre elles par des ouvertures.

Selon une variante avantageuse, l'appui est réalisé par l'assemblage de deux éléments principaux, le premier étant constitué d'une base, d'un sommet et d'un corps annulaire avec un élément annulaire continu circonférentiellement, et une pluralité de cloisons axiales; la seconde étant constituée d'un élément annulaire adapté pour réaliser la fermeture desdites cavités c lors de son assemblage avec la base.

Selon cette forme d'exécution particulièrement avantageuse de l'invention, on utilise un appui de type connu, comprenant une série de cavités alignées circonférentiellement, avec cependant un côté ouvert, auquel on ajoute simplement une paroi permettant de fermer ces cavités, afin de constituer la cavité des résonateurs. Pour simplifier l'agencement, les ouvertures sont prévues dans la paroi rapportée. Cela implique une modification minime de l'appui, puisqu'on ne fait que lui adjoindre un élément complémentaire. Il conserve donc sensiblement la même masse. Les coûts inhérents à une telle modification sont par ailleurs minimes.

La présente invention prévoit également l'utilisation d'un appui de sécurité dans une roue pour véhicule entre la jante et le pneumatique de la roue, ledit appui étant prévu pour supporter par l'intérieur la bande de roulement dudit pneumatique en cas de perte de pression de gonflage de celui-ci, afin de former au moins une portion d'une des parois d'une cavité d'un résonateur disposé dans ladite roue et adapté pour atténuer une fréquence de résonance naturelle de cette cavité.

D'autres caractéristiques et avantages de l'invention apparaîtront à la lecture des deux exemples de réalisation de l'appui de sécurité pour roue de véhicule comportant au moins un résonateur conformes à l'invention, donnés à titre non limitatif, en se référant aux figures en annexe, dans lesquelles:

la figure 1 est un schéma de principe illustrant le fonctionnement théorique d'un résonateur de type Helmholtz;

la figure 2 illustre une vue en coupe transversale d'une roue selon l'invention, comportant un appui de sécurité avec résonateur;

la figure 3 illustre un exemple d'intégration d'un résonateur dans un appui de sécurité selon l'invention;

la figure 4 illustre un exemple de réalisation d'un appui comportant une multiplicité de résonateurs, vu en perspective;

la figure 5 illustre schématiquement un exemple de disposition de résonateurs dans un appui;

les figures 6 et 7 montrent des vues en coupe d'exemples de roues selon l'invention comportant au moins un résonateur conformé entre des éléments de profil de la jante et une ou des parois de l'appui;

les figures 8a à 8f illustrent de façon schématique des exemples de variantes d'agencement des ouvertures de résonateurs;

les figures 9a à 9d illustrent de façon schématique des exemples de variantes d'agencement de tubes de résonateurs;

la figure 10 illustre un exemple d'appui dans lequel est agencé un résonateur de type quart d'onde, vu en perspective ;

la figure 11 illustre l'appui de la figure 10, vu en élévation ;

les figures 12a et 12b illustrent des exemples d'intégration d'un résonateur dans un appui de sécurité selon l'invention comportant un nombre réduit de résonateurs ;

les figures 13a à 13d illustrent des exemples d'intégration de quelques résonateurs dans un appui de sécurité selon l'invention comportant un nombre réduit de résonateurs.

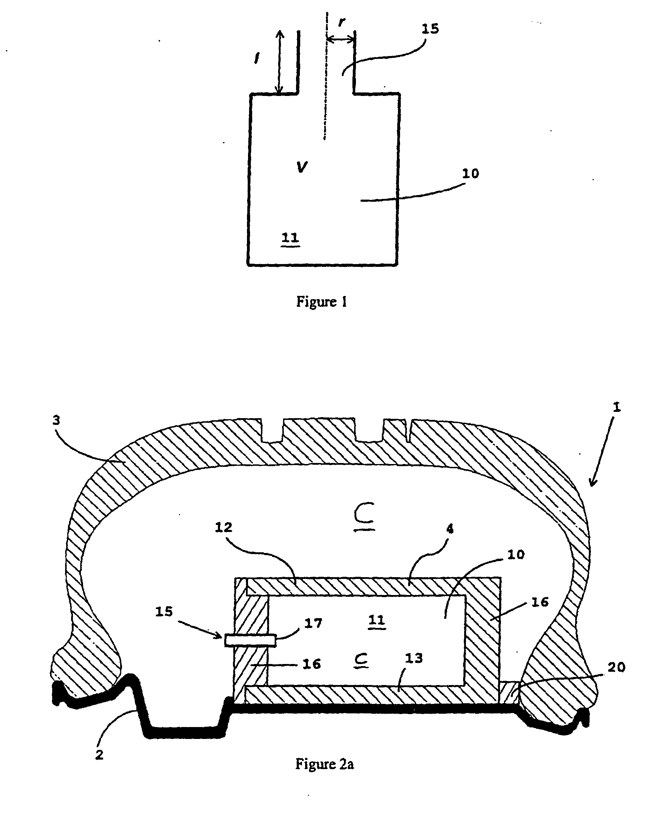

La figure 1 illustre de façon schématique le principe de fonctionnement d'un résonateur de Helmholtz. Il s'agit d'une cavité, définissant un volume V et présentant une ouverture ou col de section a ou de rayon $r$ et de longueur $I$. Cet agencement présente un mode de vibration à une fréquence donnée. C'est en fait le volume d'air, ou d'un gaz donné, contenu dans le col qui est animé d'un mouvement oscillatoire: on peut l'assimiler à une petite masse; la cavité du résonateur joue alors le rôle d'un ressort sur lequel la masse s'appuie. Pour le cas où l'ouverture de la cavité est circulaire, la fréquence de ce résonateur est donnée par la relation suivante:

$$f_H = (k/2\Pi)X(all'\,V)^{1/2}$$

Elle ne dépend donc que de la vitesse du son k et des dimensions du résonateur.

$l'$ est la longueur apparente du col du résonateur. Pour un col cylindrique, de rayon r (section $a=\Pi r^2$ ), cette longueur apparente se calcule comme suit:

$l' = l$ + 1.5 $r$ si les bords du col sont saillants;

$l' = l$ + 1.7 $r$ si les bords du col affleurent.

La longueur apparente $l'$ est donc légèrement plus longue. Ceci traduit le fait que le volume d'air qui oscille au niveau du col est un peu plus grand que ce dernier.

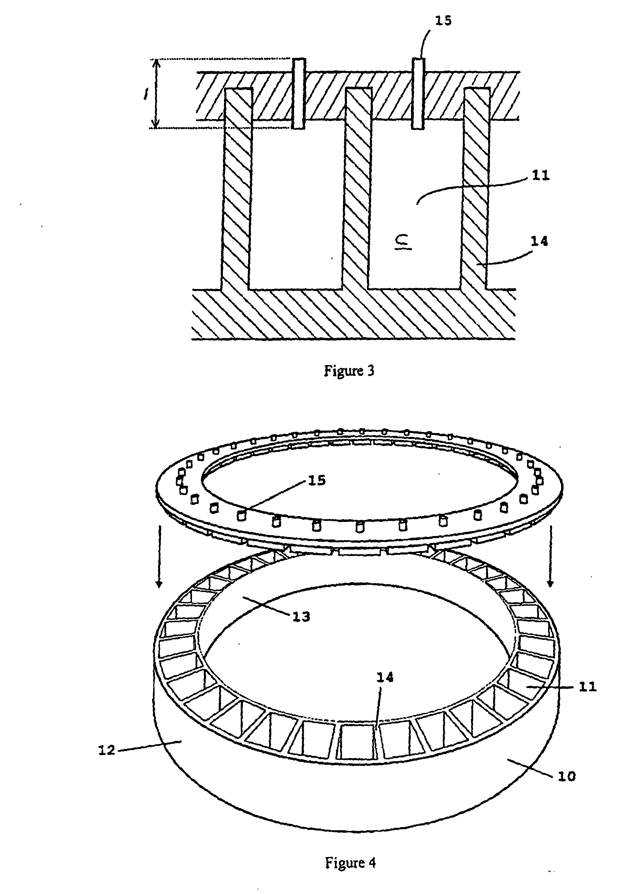

Des essais ont été réalisés avec un ensemble comprenant des résonateurs (illustrés à la figure 3) d'un volume V= 75 ml, un diamètre intérieur du col = 6 mm. Pour atténuer une fréquence de l'ordre de 195 Hz, il faut un col d'une longueur d'environ 25 mm. On obtient alors des résultats particulièrement intéressants.

Dans le cas où l'ouverture de la cavité n'est pas de forme circulaire, une relation équivalente peut être établie, afin de permettre le dimensionnement de cette ouverture. En effet, l'ouverture peut être carrée, rectangulaire, ou prendre une multitude d'autres formes.

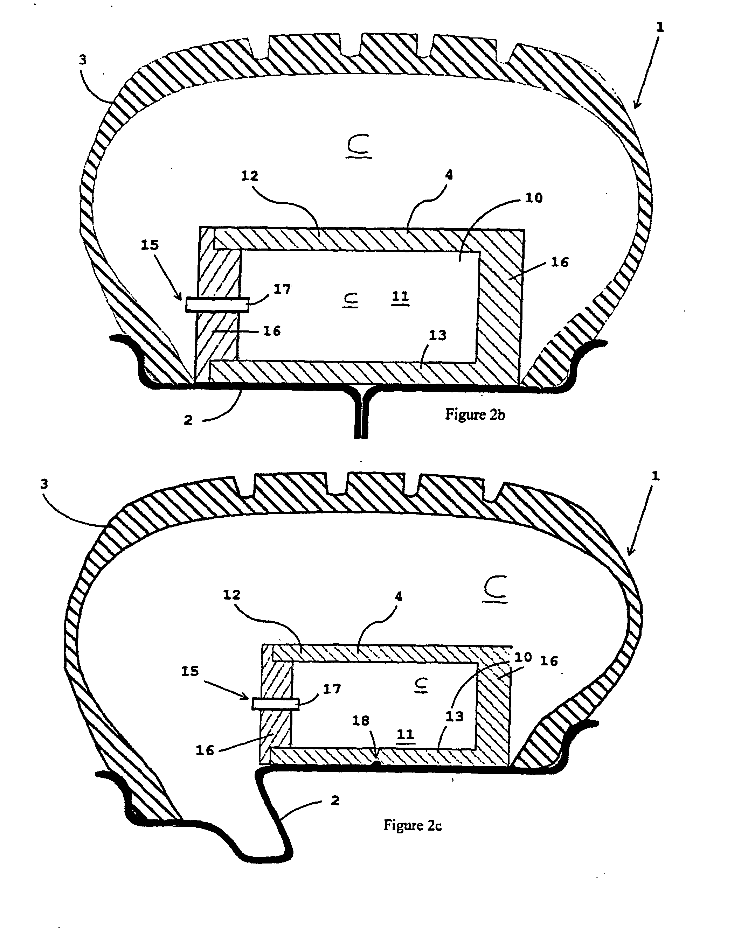

Les figures 2a à 2d illustrent différents exemples de roues selon l'invention en coupe transversale. La roue 1 comprend une jante 2 sur laquelle est monté un pneumatique 3. Un appui 4 est disposé à l'intérieur du pneumatique, monté contre la jante 2. Des exemples de réalisation d'une jante, d'un appui et d'un pneumatique sont décrits dans les documents EP 0 796 747 et US 4 248 286.

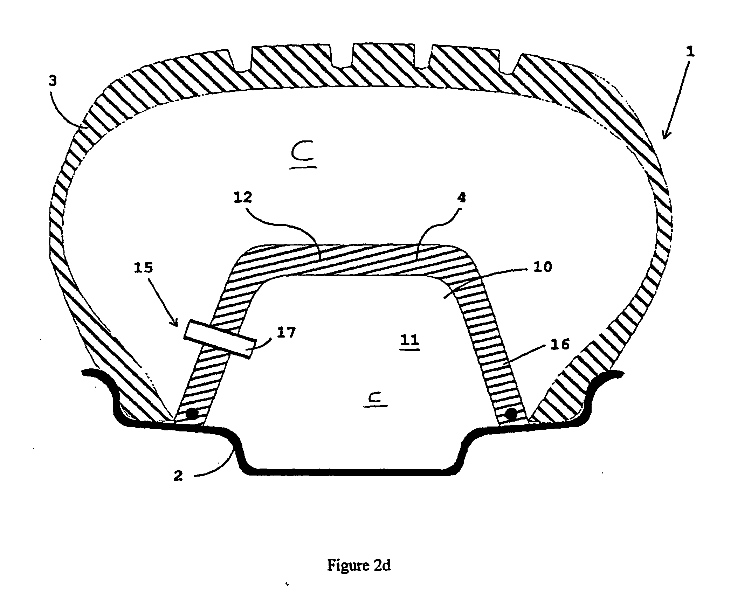

Selon l'invention, l'appui comporte par ailleurs une multiplicité de résonateurs de Helmholtz. Ceux-ci sont avantageusement conformés dans la portion creuse de l'appui. Ainsi, selon les différents exemples des figures 2a à 2d, des cavités 11 séparées par des parois inter-cavités 14 sont réparties circonférentiellement entre les parois externe 12 et interne 13 de l'appui. Chacune des cavités 11 défini un volume V délimité par l'espace entre les parois externe 12 et interne 13 d'une part, les deux parois inter-cavités 14 et les deux parois latérales 16 d'autre part. Les cavités 11 illustrées aux figures 2 et 4 occupent des volumes sensiblement égaux. Toutefois, des variantes avec des cavités comportant des volumes différents, par exemple deux, trois ou plus volumes donnés répartis circonférentiellement sont également possibles.

Selon l'exemple illustré aux figures 2 et 4, pour chacun des résonateurs, l'une des parois adjacentes ou en communication avec la cavité C du pneumatique comporte au moins une ouverture 15. Tel qu'illustré à la figure 2, l'ouverture est avantageusement prévue au niveau de la paroi latérale se trouvant face au flanc interne du pneumatique, prévu pour être monté du côté interne de la roue. Bien évidemment, l'ouverture peut aussi, selon diverses variantes, être disposée sur une autre paroi, comme par exemple la paroi externe 12.

Dans l'exemple de la figure 2d, la paroi inférieure du résonateur est constituée par une portion de la jante 2.

La figure 4 illustre une variante avantageuse où les résonateurs seront constitués par les cellules d'un appui de sécurité de type connu. Pour simplifier l'agencement, les ouvertures sont prévues dans la paroi rapportée. Des tubes 17, disposés dans les ouvertures, permettent d'optimiser les caractéristiques vibratoires des résonateurs.

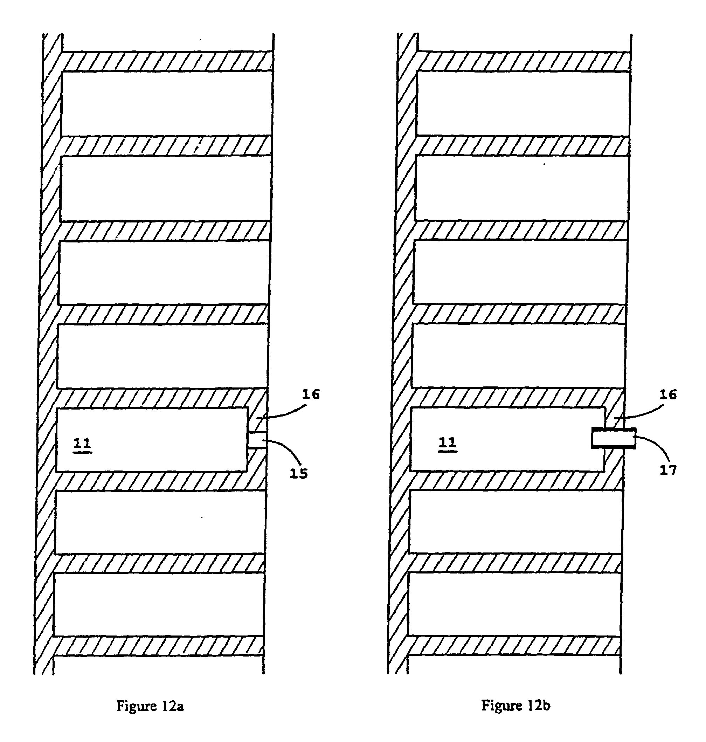

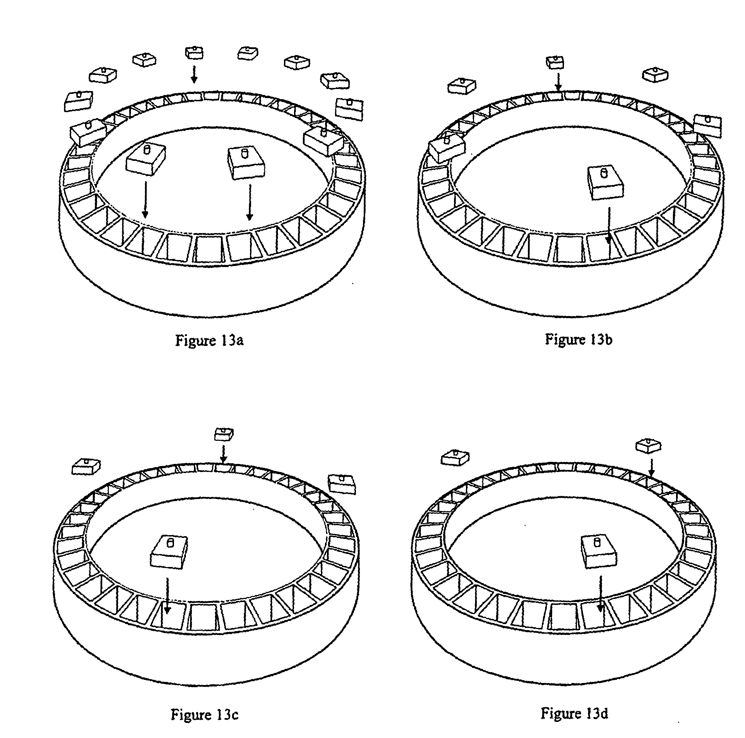

Bien que la figure 4 illustre un appui dans lequel les cavités ont des volumes identiques et sont agencées selon un ordre régulier, les volumes peuvent varier le long de la circonférence, et/ou l'agencement peut être non uniforme et comporter par exemple des sections sans résonateur, ou avec des résonateurs d'autres dimensions, etc. Les dimensions et positions des ouvertures 15 et/ou des tubes 17 peuvent également varier le long de la circonférence. L'utilisation de résonateurs de caractéristiques différentes peut par exemple servir à atténuer différentes fréquences de résonances se manifestant chacune à une vitesse de rotation distincte. Les figures 13a à 13d illustrent d'autres exemples où seulement quelques cavités sont utilisées pour former des résonateurs. En effet, plusieurs essais ont permis de démontrer que l'utilisation d'un nombre restreint de résonateurs peut permettre, dans certains cas, d'atténuer de façon satisfaisante l'énergie acoustique générée par la vibration de l'air dans la cavité. Les figures 12a et 12b illustrent comment de tels résonateurs peuvent par exemple être intégrés dans un appui.

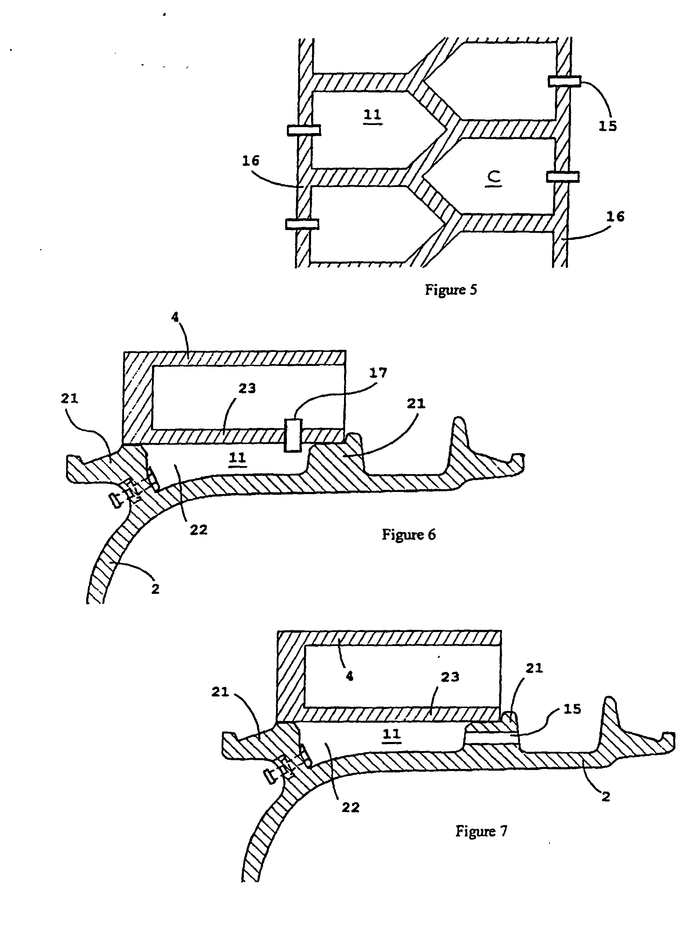

Selon une autre variante illustrée à la figure 5, les résonateurs peuvent par exemple être disposés en opposition, selon un agencement alterné, tel que montré.

Les figures 6 et 7 illustrent une forme d'exécution selon l'invention dans laquelle l'appui 4 est disposé contre la jante 2 de façon à former une cavité entre la jante et l'appui. Cette cavité servira en partie pour la conformation des résonateurs.

Selon cette forme d'exécution, la jante comporte des portions proéminentes 21 ou rehaussements entre lesquels des portions creuses 22 ou vallées sont définies. Pour obtenir une cavité du type de celle d'un résonateur, il suffit de fermer les portions creuses 22 avec une paroi 23 de fermeture. On utilise alors avantageusement une ou plusieurs des parois d'un appui 4, par exemple disposé contre les portions proéminentes 21 de la jante.

L'ajout d'une ou plusieurs ouvertures 15, permet l'obtention d'un résonateur de type Helmholtz ou quart d'onde. Les ouvertures peuvent être prévues dans la paroi de fermeture 23 de l'appui, tel qu'illustré à la figure 6, ou à même la jante, par exemple à travers une portion proéminente 21, tel qu'illustré à la figure 7. Un tube 17 peut également être disposé dans l'ouverture, que celle-ci soit prévue dans la jante ou dans l'appui.

Des parois radiales s'étendant entre la jante 2 et la paroi 23 de l'appui de façon à isoler plusieurs cavités c circonférentiellement autour de la jante permettent d'obtenir un ensemble comportant une multiplicité de résonateurs.

Il résulte des exemples illustrés aux figures 6 et 7, un ou plusieurs résonateurs, chacun avec une cavité 11, en communication fluidique avec la cavité C formé entre la jante et le pneumatique, par une ouverture 15, éventuellement pourvue d'un tube 17.

Une telle configuration est particulièrement avantageuse puisqu'elle permet de réduire l'amplitude ou même de supprimer certains modes de résonance de la cavité, sans que la jante doive être modifiée de façon importante (tout au plus faut-il prévoir un ou plusieurs perçages au niveau de la jante) ou sans nécessiter l'ajout d'un élément additionnel uniquement conçu pour loger les résonateurs.

Une telle configuration peut servir pour l'aménagement de résonateurs de type Helmholtz ou de type quart d'onde.

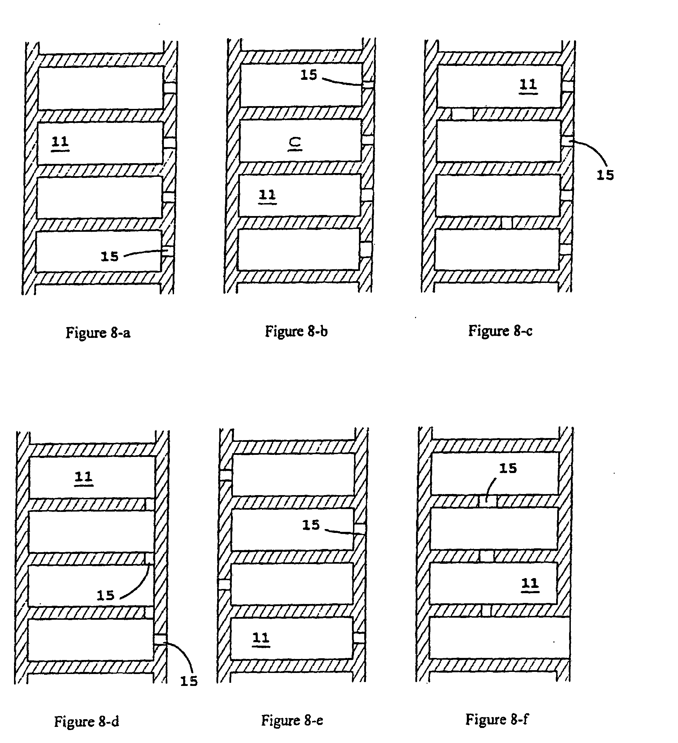

Les figures 8a à 8f illustrent des exemples de variantes d'agencements des ouvertures permettant la communication fluidique entre les cavités respectives des résonateurs et de la roue. Ainsi la figure 8a illustre un premier exemple où les ouvertures 15 sont toutes sensiblement de même diamètre. La figure 8b illustre un exemple comportant une série d'ouvertures avec des diamètres différents, dans ce cas selon une progression sensiblement régulière depuis le plus petit vers le plus grand diamètre. La figure 8c illustre une variante où des paires de cavités sont en communication fluidique entre elles, chacune d'elles étant par ailleurs reliée avec la cavité C de la roue. Dans l'exemple illustré, les ouvertures 15 sont de diamètres différents et à des positions différentes, mais l'un et ou l'autre pourraient être identiques. La figure 8d illustre une autre variante où quatre cavités sont en communication, avec une seule d'entre elles communiquant avec la cavité C de la roue.

Selon une variante avantageuse, notamment pour des résonateurs de Helmholtz, les cavités sont agencées de façon à former un réseau. Les figures 8c, 8d et 8f illustrent de tels exemples. Un tel agencement peut éventuellement agir sur une ou plusieurs fréquences. Une variante du type de celle illustrée à la figure 8d peut permetre par ailleurs de faciliter le jumelage d'un appui en fonction d'un pneumatique d'une dimension donnée. Une ou plusieurs séries de cavités sont reliées les unes aux autres; en fonction de la fréquence ou de la gamme de fréquences sur lesquelles on souhaite agir, une ou plusieurs cavités de chaque série est percée afin d'établir la communication avec la cavité C de la roue. On peut ainsi utiliser un même appui pour plusieurs dimensions de pneumatiques.

De tels exemples de variantes peuvent évidemment être utilisées autant pour des formes d'exécution où les résonateurs sont totalement intégrés à l'appui qu'à des formes d'exécution où les résonateurs sont conformés par des parois de l'appui et de la jante.

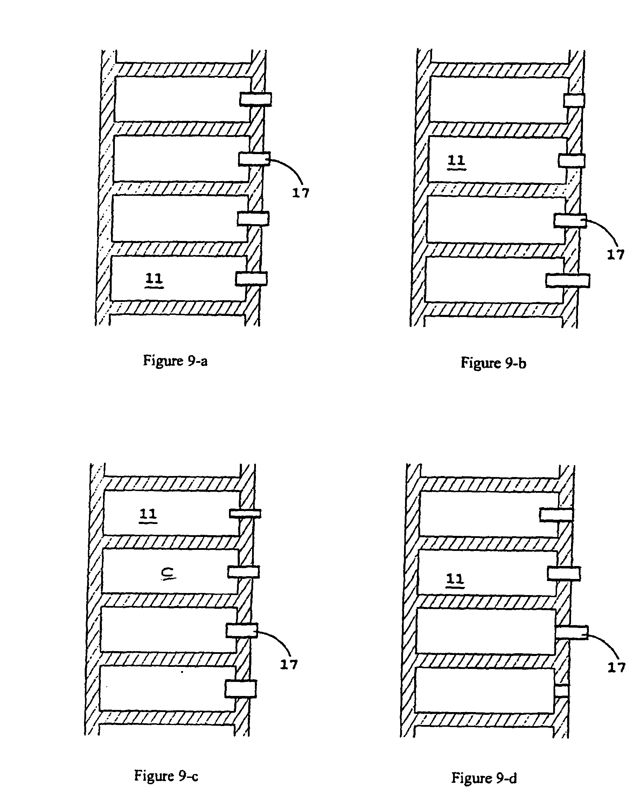

Les figures 9a à 9d illustrent des exemples de variantes d'agencements des ouvertures permettant la communication fluidique entre les cavités respectives des résonateurs et de la roue avec différents exemples d'agencements de tubes 17. Ainsi la figure 9a illustre un premier exemple où les tubes 17 sont tous sensiblement de même diamètre et de même longueur. La figure 9b illustre un exemple comportant une série de cavités avec des tubes de longueurs différentes, dans ce cas selon une progression sensiblement régulière depuis la plus petite longueur vers la plus grande longueur. La figure 9c illustre un exemple comportant une série de cavités avec des tubes de diamètres différents, dans ce cas selon une progression sensiblement régulière depuis le plus petit diamètre vers le plus grand diamètre. Enfin, la figure 9d illustre une variante où les tubes sont disposés selon différents types d'agencements. Bien sûr, il est possible de combiner entre eux ces différents types de configurations, ou d'en envisager encore d'autres, par exemples avec des progressions irrégulières et/ou des séries comportant un nombre différent de cavités, sans sortir du cadre de la présente invention .

En pratique, lors du roulage, dû à l'écrasement du pneumatique et à la rotation de la roue, il risque de se produire un dédoublement de la fréquence de résonance, notamment au premier mode de cavité. Avec des résonateurs de Helmholt, on peut choisir d'avoir différents résonateurs agissant chacun à des fréquences différentes ou encore avoir par exemple des paires ou autres ensembles de résonateurs, etc.

De tels exemples de variantes peuvent évidemment être utilisées autant pour des formes d'exécution où les résonateurs sont totalement intégrés à l'appui qu'à des formes d'exécution où les résonateurs sont conformés par des parois de l'appui et de la jante.

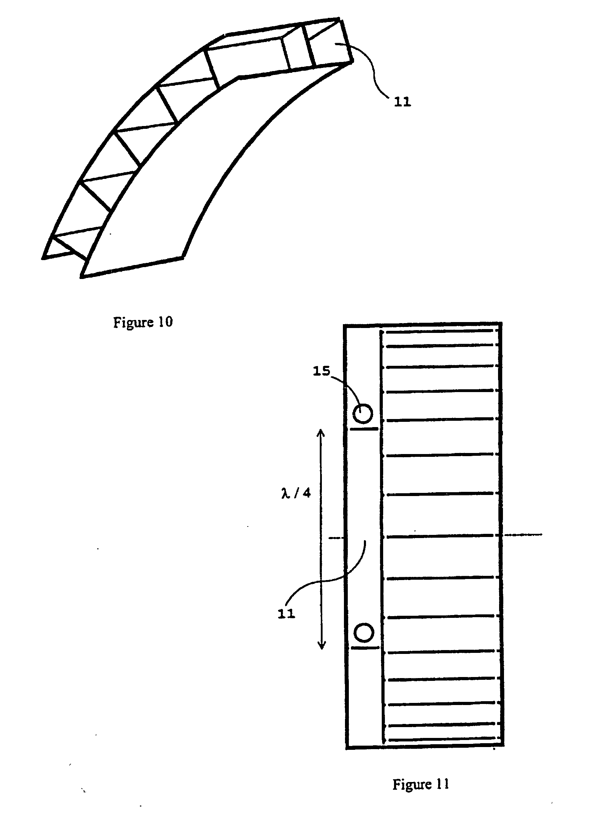

Selon une autre forme d'exécution avantageuse de l'invention illustrée aux figures 10 et 11, l'insert de sécurité est utilisé pour loger des résonateurs quart d'onde. Selon ce type de résonateur, l'insert peut être subdivisé par exemple en deux ou quatre sections ou cavités, correspondant chacune sensiblement au quart de la longueur d'onde de la résonance naturelle que l'on souhaite atténuer. Chaque cavité c est reliée directement ou indirectement à la cavité C formée dans le volume situé entre le pneumatique et la jante par au moins une ouverture.

L'exemple illustré aux figures 10 et 11 montre un appui de sécurité du même type que celui représenté à la figure 2, dans lequel des cavités 11, de forme allongée, (puisque devant couvrir λ/4) sont réparties circonférentiellement contre le corps de l'appui. La figure 11 illustre l'alignement des cavités pourvues d'ouvertures 15, éventuellement munies de tubes similaires à ceux déjà décrits. Les ouvertures 15 assurent la communication fluidique entre les cavités 11 et la cavité C de la roue. De façon typique, un résonateur quart d'onde comporte au moins une cavité, s'étendant sur une distance circonférentielle d'environ λ/4. Une disposition circonférentiellement symétrique facilite l'équilibrage de la roue. On peut prévoir plusieurs série de résonateurs, de sorte à en obtenir plus de quatre, par exemple huit.

Ce résonateur a pour effet de produire une onde en phase inversée par rapport à l'onde parasite, ce qui a pour effet d'inhiber cette dernière.

Avec des résonateurs de type quart d'onde, on peut aussi prévoir un résonateur plus grand qu'un quart de longueur d'onde, pour agir contre une fréquence plus faible, ou un résonateur plus petit qu'un quart de longueur d'onde, pour agir contre une fréquence plus élevée.

On peut également configurer un résonateur quart d'onde avec une cavité allongée couvrant sensiblement une distance de l'ordre de λ/2, avec une ouverture sensiblement centrale. Chaque demi-cavité agit alors comme un résonateur.

Avec des résonateurs de l'un ou l'autre type, on peut viser une fréquence moyenne et/ou augmenter la bande d'efficacité du résonateur. Par exemple, un résonateur peut couvrir une bande donnée de fréquences. On peut élargir la bande d'efficacité en disposant dans ou contre un résonateur un matériau amortisseur, comme par exemple un matériau de type mousse.

La fréquence de résonance d'une roue étant directement liée au diamètre de cette dernière, il est aisé d'adapter le présent dispositif à toutes les dimensions de roues possible, sachant que plus le diamètre de la roue est important, plus faible sera la fréquence naturelle.

De tels exemples de variantes peuvent évidemment être utilisées autant pour des formes d'exécution où les résonateurs sont totalement intégrés à l'appui qu'à des formes d'exécution où les résonateurs sont conformés par des parois de l'appui et de la jante.

## Revendications

1. Roue (1) pour véhicule, comportant une jante (2), un disque, un pneumatique (3) définissant avec la jante une cavité C circonférentielle, et au moins un résonateur adapté pour diminuer l'amplitude ou supprimer une résonance naturelle de la dite cavité, **caractérisée en ce que** ladite roue (1) comprend également un appui (4) de sécurité, pour supporter par l'intérieur la bande de roulement de ce pneumatique (3) en cas de perte de pression de gonflage, ledit appui (4) procurant au moins une des parois (12, 13, 14, 16) dudit résonateur.

2. Roue pour véhicule selon la revendication 1, dans laquelle chaque résonateur est constitué d'une cavité c, occupant un volume V en communication fluidique avec ladite cavité C.

3. Roue pour véhicule selon la revendication 2, dans laquelle ladite communication fluidique est assurée par au moins une ouverture (15).

4. Roue pour véhicule selon l'une des revendications 1 à 3, dans laquelle les parois de l'appui (4) forment la totalité des parois du résonateur.

5. Roue pour véhicule selon l'une des revendications 2 à 4, dans laquelle les parois de la cavité c d'un résonateur sont constituées par des portions de l'appui (4).

6. Roue pour véhicule selon l'une des revendications 1 à 3, dans laquelle ledit résonateur est disposé adjacent à l'appui (4).

7. Roue pour véhicule selon la revendication 6, dans laquelle les parois de la cavité c d'un résonateur sont constituées par des portions de l'appui (4) et des portions de jante (2).

8. Roue pour véhicule selon l'une des revendications précédentes, dans laquelle ladite résonance correspond au premier mode de cavité.

9. Roue pour véhicule selon l'une des revendications 2 à 8, dans laquelle l'ouverture (15) d'un résonateur est de diamètre et de longueur calibrés.

10. Roue pour véhicule selon la revendication 9, dans laquelle le volume V et les dimensions calibrées de l'ouverture (15) sont déterminés de façon à atténuer ou supprimer au moins une résonance acoustique de l'air contenu dans la cavité C du pneu, correspondant à une fréquence donnée.

11. Roue pour véhicule selon l'une des revendications précédentes, dans laquelle ledit résonateur est un résonateur de Helmholtz.

12. Roue pour véhicule selon l'une des revendications 1 à 8, dans laquelle ledit résonateur est un résonateur quart d'onde.

13. Roue pour véhicule selon la revendication 12, dans laquelle les cavités du résonateur sont agencées de façon à s'étendre circonférentiellement sur une distance correspondant sensiblement à λ/4.

14. Appui (4) de sécurité destiné à être monté sur une jante (2) d'une roue pour véhicule à l'intérieur d'un pneumatique (3), pour supporter par l'intérieur la bande de roulement de ce pneumatique (3) en cas de perte de pression de gonflage, ledit pneumatique (3) définissant avec la jante une cavité C, **caractérisé en ce que** ledit appui (4) sert à fournir au moins une des parois (12, 13, 14, 16) d'un résonateur adapté pour diminuer l'amplitude ou supprimer une fréquence de résonance naturelle de la dite cavité.

15. Appui de sécurité selon la revendication 14, dans lequel ledit résonateur est disposé dans l'appui (4).

16. Appui de sécurité selon l'une des revendications 14 ou 15, dans lequel chaque résonateur est constitué d'une cavité c, occupant un volume V, définie dans ledit appui et adapté pour être en communication fluidique avec ladite cavité C.

17. Appui de sécurité selon la revendication 16, dans lequel ladite communication fluidique est assurée par au moins une ouverture (15).

18. Appui de sécurité selon l'une des revendications 14 à 17, dans lequel ladite résonance correspond au premier mode de cavité.

19. Appui de sécurité selon la revendication 17, dans lequel l'ouverture est constituée d'un tube (17).

20. Appui de sécurité selon l'une des revendications 14 à 19, dans lequel ledit appui comporte:

- une base sensiblement cylindrique destinée à s'adapter autour de la jante,

- un sommet sensiblement cylindrique destiné à entrer en contact avec la bande de roulement en cas de perte de pression, et laissant une garde par rapport à celle-ci à la pression nominale, et un corps annulaire reliant ladite base et ledit sommet, ladite base, ledit sommet et ledit corps annulaire définissant une pluralité de cavités c adaptées pour être reliées directement ou indirectement avec la cavité C par au moins une ouverture.

21. Appui de sécurité selon la revendication 20, dans lequel ledit corps comporte deux parois latérales (12, 13) annulaires reliées par une pluralité de cloisons (14) d'orientations sensiblement axiales, lesdites parois et cloisons définissant avec la base et le sommet lesdites cavités c.

22. Appui de sécurité selon la revendication 21, dans lequel lesdites cloisons (14) sont régulièrement réparties sur la circonférence.

23. Appui de sécurité selon la revendication 20, dans lequel certaines des cavités c sont reliées entre elles par des ouvertures.

24. Appui de sécurité selon une des revendications 14 à 23, réalisé par l'assemblage de deux éléments principaux, le premier étant constitué d'une base, d'un sommet et d'un corps annulaire avec un élément annulaire continu circonférentiellement, et une pluralité de cloisons axiales; la seconde étant constituée d'un élément annulaire adapté pour réaliser la fermeture desdites cavités c lors de son assemblage avec la base.

25. Appui de sécurité selon une des revendications 14 à 23, réalisé par l'assemblage de deux éléments principaux coopérant pour réaliser lors de leur assemblage les ouvertures reliant les cavités c avec la cavité C et les éventuelles ouvertures entre elles.

26. Appui de sécurité selon l'une des revendications 14 à 25, dans lequel ladite ouverture (15) est de diamètre et de longueur calibrés.

27. Appui de sécurité selon la revendication 26, dans lequel le volume V et les dimensions calibrées de l'ouverture sont déterminés de façon à atténuer ou supprimer au moins une résonance acoustique de l'air contenu dans la cavité C du pneu, correspondant à une fréquence donnée.

28. Appui de sécurité selon l'une des revendications 19 à 25, dans lequel ledit tube (17) est de longueur et de diamètre interne calibrés.

29. Appui de sécurité selon l'une des revendications 14 à 28, dans lequel ledit résonateur est un résonateur de Helmholtz.

30. Appui de sécurité selon l'une des revendications 14 à 25, dans lequel ledit résonateur est un résonateur de type quart d'onde.

31. Appui de sécurité selon la revendication 30, dans lequel lesdites cavités c s'étendent circonférentiellement le long du corps principal de l'appui sur une distance correspondant sensiblement à $\lambda/4$.

32. Utilisation d'un appui (4) de sécurité dans une roue pour véhicule, dans la cavité C située entre la jante (2) et le pneumatique (3) de la roue, ledit appui (4) étant prévu pour supporter par l'intérieur la bande de roulement dudit pneumatique (3) en cas de perte de pression de gonflage de celui-ci, afin de former au moins une portion d'une des parois d'une cavité c d'un résonateur disposé dans ladite roue et adapté pour diminuer l'amplitude ou supprimer une résonance naturelle de la dite cavité C.

**Claims**

1. A vehicle wheel (1), comprising a rim (2), a disc, a tyre (3) defining with the rim a circumferential cavity C, and at least one resonator suitable for reducing the amplitude of or suppressing a natural resonance of said cavity, **characterised in that** said wheel (1) also comprises a safety support (4), for supporting the tread of this tyre (3) from the inside in the event of a loss of inflation pressure, said support (4) providing at least one of the walls (12, 13, 14, 16) of said resonator.

2. A vehicle wheel according to claim 1, in which each resonator is formed of a cavity c, occupying a volume V in fluidic communication with said cavity C.

3. A vehicle wheel according to claim 2, in which said fluidic communication is provided by at least one opening (15).

4. A vehicle wheel according to one of claims 1 to 3, in which the walls of the support (4) form all the walls of the resonator.

5. A vehicle wheel according to one of claims 2 to 4, in which the walls of the cavity c of a resonator are formed by portions of the support (4).

6. A vehicle wheel according to one of claims 1 to 3, in which said resonator is arranged adjacent to the support (4).

7. A vehicle wheel according to claim 6, in which the walls of the cavity c of a resonator are formed by portions of the support (4) and rim portions (2).

8. A vehicle wheel according to one of the preceding claims, in which said resonance corresponds to the first cavity mode.

9. A vehicle wheel according to one of claims 2 to 8, in which the opening (15) of a resonator is of a calibrated diameter and length.

10. A vehicle wheel according to claim 9, in which the volume V and the calibrated dimensions of the opening (15) are determined so as to attenuate or suppress at least one acoustic resonance of the air contained in the cavity C of the tyre, corresponding to a given frequency.

11. A vehicle wheel according to one of the preceding claims, in which said resonator is a Helmholtz resonator.

12. A vehicle wheel according to one of claims 1 to 8, in which said resonator is a quarter-wave resonator.

**13.** A vehicle wheel according to claim 12, in which the cavities of the resonator are arranged so as to extend circumferentially over a distance corresponding substantially to λ/4.

**14.** A safety support (4) intended to be mounted on a rim (2) of a vehicle wheel within a tyre (3), for supporting the tread of this tyre (3) from the inside in the event of a loss of inflation pressure, said tyre (3) defining with the rim a cavity C, **characterised in that** said support (4) serves to provide at least one of the walls (12, 13, 14, 16) of a resonator suitable for attenuating the amplitude of or suppressing a natural resonant frequency of said cavity.

**15.** A safety support according to claim 14, in which said resonator is arranged in the support (4).

**16.** A safety support according to one of claims 14 or 15, in which each resonator is formed of a cavity c, occupying a volume V, defined in said support and adapted to be in fluidic communication with said cavity C.

**17.** A safety support according to claim 16, in which said fluidic communication is provided by at least one opening (15).

**18.** A safety support according to one of claims 14 to 17, in which said resonance corresponds to the first cavity mode.

**19.** A safety support according to claim 17, in which the opening is formed by a tube (17).

**20.** A safety support according to one of claims 14 to 19, in which said support comprises:

- a substantially cylindrical base intended to be fitted around the rim,

- a substantially cylindrical apex intended to come into contact with the tread in the event of a loss of pressure, and leaving a clearance relative to the latter at nominal pressure, and an annular body connecting said base and said apex, said base, said apex and said annular body defining a plurality of cavities c suitable to be connected directly or indirectly to the cavity C by at least one opening.

**21.** A safety support according to claim 20, in which said body comprises two annular lateral walls (12, 13) connected by a plurality of partitions (14) of substantially axial orientations, said walls and partitions defining said cavities c with the base and the apex.

**22.** A safety support according to claim 21, in which said partitions (14) are regularly distributed over the circumference.

**23.** A safety support according to claim 20, in which some of the cavities c are interconnected via openings.

**24.** A safety support according to one of claims 14 to 23, produced by assembling two main elements, the first being formed of a base, an apex and an annular body with a circumferentially continuous annular element, and a plurality of axial partitions; the second being formed of an annular element suitable for closing said cavities c when it is assembled with the base.

**25.** A safety support according to one of claims 14 to 23, produced by assembling two main elements which cooperate to form, upon assembly, the openings connecting the cavities c to the cavity C and any openings to each other.

**26.** A safety support according to one of claims 14 to 25, in which said opening (15) is of a calibrated diameter and length.

**27.** A safety support according to claim 26, in which the volume V and the calibrated dimensions of the opening are determined so as to attenuate or suppress at least one acoustic resonance of the air contained in the cavity C of the tyre, corresponding to a given frequency.

**28.** A safety support according to one of claims 19 to 25, in which said tube (17) is of a calibrated internal diameter and length.

**29.** A safety support according to one of claims 14 to 28, in which said resonator is a Helmholtz resonator.

**30.** A safety support according to one of claims 14 to 25, in which said resonator is a quarter-wave-type resonator.

**31.** A safety support according to claim 30, in which said cavities c extend circumferentially along the main body of the support over a distance corresponding substantially to λ/4.

**32.** The use of a safety support (4) in a vehicle wheel, in the cavity C located between the rim (2) and the tyre (3) of the wheel, said support (4) being provided for supporting the tread of said tyre (3) from the inside in the event of a loss of inflation pressure therefrom, in order to form at least a portion of one of the walls of a cavity c of a resonator arranged in said wheel and suitable for attenuating the amplitude or suppressing a natural resonance of said cavity C.

**Patentansprüche**

1. Fahrzeugrad (1), das eine Felge (2), eine Scheibe, einen Luftreifen (3), der mit der Felge einen Umfangshohlraum C definiert, und mindestens einen Resonator umfaßt, der dazu eingerichtet ist, um bei einer natürlichen Resonanz des genannten Hohlraums die Amplitude zu mindern oder sie zu unterdrücken, **dadurch gekennzeichnet, daß** das genannte Rad (1) auch einen Sicherheitsstützkörper (4) aufweist, um von innen her die Lauffläche dieses Reifens (3) im Fall des Verlusts von Aufpumpdruck abzustützen, wobei der genannte Stützkörper (4) mindestens eine der Wände (12, 13, 14, 16) des genannten Resonators bildet.

2. Fahrzeugrad nach Anspruch 1, worin jeder Resonator von einem Hohlraum c gebildet ist, der ein Volumen V einnimmt und in Strömungsmittelverbindung mit dem genannten Hohlraum C steht.

3. Fahrzeugrad nach Anspruch 2, worin die genannte Strömungsmittelverbindung durch mindestens eine Öffnung (15) sichergestellt ist.

4. Fahrzeugrad nach einem der Ansprüche 1 bis 3, worin die Wände des Stützkörpers (4) die Gesamtheit der Wände des Resonators bildet.

5. Fahrzeugrad nach einem der Ansprüche 2 bis 4, worin die Wände des Hohlraums c eines Resonators von Teilen des Stützkörpers (4) gebildet sind.

6. Fahrzeugrad nach einem der Ansprüche 1 bis 3, worin der genannte Resonator dem Stützkörper (4) benachbart angeordnet ist.

7. Fahrzeugrad nach Anspruch 6, worin die Wände des Hohlraums c eines Resonators von Teilen des Stützkörpers (4) und Teilen der Felge (2) gebildet sind.

8. Fahrzeugrad nach einem der vorausgehenden Ansprüche, worin die genannte Resonanz dem ersten Schwingungsbereich des Hohlraums entspricht.

9. Fahrzeugrad nach einem der Ansprüche 2 bis 8, worin die Öffnung (15) eines Resonators einen kalibrierten Durchmesser und eine kalibrierte Länge aufweist.

10. Fahrzeugrad nach Anspruch 9, worin das Volumen V und die kalibrierten Abmessungen der Öffnung (15) derart bestimmt sind, daß mindestens eine akustische Resonanz der Luft, die im Hohlraum C des Reifens enthalten ist, entsprechend einer gegebenen Frequenz abgeschwächt oder unterdrückt wird.

11. Fahrzeugrad nach einem der vorausgehenden Ansprüche, worin der genannte Resonator ein Helmholtz-Resonator ist.

12. Fahrzeugrad nach einem der Ansprüche 1 bis 8, worin der genannte Resonator ein Viertelwellen-Resonator ist.

13. Fahrzeugrad nach Anspruch 12, worin die Hohlräume des Resonators derart angeordnet sind, daß sie sich in Umfangsrichtung über eine Strecke erstrecken, die im wesentlichen λ/4 entspricht.

14. Sicherheitsstützkörper (4), der dazu bestimmt ist, auf einer Felge (2) eines Fahrzeugrades im Inneren eines Luftreifens (3) angebracht zu werden, um die Lauffläche dieses Reifens (3) von innen her im Fall des Verlustes des Aufpumpdrucks abzustützen, wobei der genannte Reifen (3) zusammen mit der Felge einen Hohlraum C definiert, **dadurch gekennzeichnet, daß** der genannte Stützkörper (4) dazu dient, mindestens eine der Wände (12, 13, 14, 16) eines Resonators zu liefern, der dazu eingerichtet ist, um bei einer natürlichen Resonanz des genannten Hohlraums die Amplitude abzuschwächen oder zu unterdrücken.

15. Sicherheitsstützkörper nach Anspruch 14, worin der genannte Resonator im Stützkörper (4) angeordnet ist.

16. Sicherheitsstützkörper nach einem der Ansprüche 14 oder 15, worin jeder Resonator von einem Hohlraum c gebildet ist, der ein Volumen V einnimmt, im genannten Stützkörper definiert ist und dazu eingerichtet ist, mit dem genannten Hohlraum C in Strömungsmittelverbindung zu stehen.

17. Sicherheitsstützkörper nach Anspruch 16, worin die genannte Strömungsmittelverbindung durch mindestens eine Öffnung (15) sichergestellt ist.

18. Sicherheitsstützkörper nach einem der Ansprüche 14 bis 17, worin die genannte Resonanz dem ersten Schwingungsbereich des Hohlraums entspricht.

19. Sicherheitsstützkörper nach Anspruch 17, worin die Öffnung von einem Rohr (17) gebildet ist.

20. Sicherheitsstützkörper nach einem der Ansprüche 14 bis 19, worin der Stützkörper

   - eine im wesentlichen zylindrische Basis, die dazu bestimmt ist, sich rund um die Felge anzupassen, und

- einen im wesentlichen zylindrischen Scheitel, der dazu bestimmt ist, mit der Lauffläche im Fall des Druckverlustes in Berührung zu gelangen und einen Abstand bezüglich dieser bei Normaldruck hält, sowie einen kreisringförmigen Körper aufweist, der die genannte Basis und den genannten Scheitel verbindet, wobei die genannte Basis, der genannte Scheitel und der genannte, ringförmige Körper eine Vielzahl von Hohlräumen c definieren, die dazu eingerichtet sind, um unmittelbar oder mittelbar durch mindestens eine Öffnung mit dem Hohlraum C verbunden zu werden.

21. Sicherheitsstützkörper nach Anspruch 20, worin der genannte Körper zwei seitliche, ringförmige Wände (12, 13) aufweist, die durch eine Vielzahl von Zwischenwänden (14) mit im wesentlichen axialen Ausrichtungen verbunden sind, wobei die genannten Wände und Zwischenwände mit der Basis und dem Scheitel die genannten Hohlräume c festlegen.

22. Sicherheitsstützkörper nach Anspruch 21, worin die genannten Trennwände (14) über den Umfang regelmäßig verteilt sind.

23. Sicherheitsstützkörper nach Anspruch 20, worin bestimmte der Hohlräume c miteinander durch Öffnungen verbunden sind.

24. Sicherheitsstützkörper nach einem der Ansprüche 14 bis 23, hergestellt durch Zusammenbau von zwei Hauptelementen, wobei das erste von einer Basis, einem Scheitel und einem ringförmigen Körper mit einem in Umfangsrichtung durchgehenden, ringförmigen Element und einer Vielzahl axialer Trennwände gebildet ist, und das zweite von einem ringförmigen Element gebildet ist, das dazu eingerichtet ist, das Schließen der genannten Hohlräume c während seines Zusammenbaus mit der Basis durchzuführen.

25. Sicherheitsstützkörper nach einem der Ansprüche 14 bis 23, hergestellt durch Zusammenbau von zwei Hauptelementen, die zusammenwirken, um während ihres Zusammenbaus die Öffnungen herzustellen, die die Hohlräume c mit dem Hohlraum C und den etwaigen Öffnungen miteinander zu verbinden.

26. Sicherheitsstützkörper nach einem der Ansprüche 14 bis 25, worin die genannte Öffnung (15) einen kalibrierten Durchmesser und eine kalibrierte Länge aufweist.

27. Sicherheitsstützkörper nach Anspruch 26, worin das Volumen V und die kalibrierten Abmessungen der Öffnung derart bestimmt sind, daß sie mindestens eine akustische Resonanz der Luft abschwächen oder unterdrücken, die im Hohlraum C des Reifens enthalten ist, entsprechend einer gegebenen Frequenz.

28. Sicherheitsstützkörper nach einem der Ansprüche 19 bis 25, worin das genannte Rohr (17) eine kalibrierte Länge und einen kalibrierten Innendurchmesser aufweist.

29. Sicherheitsstützkörper nach einem der Ansprüche 14 bis 28, worin der genannte Resonator ein Helmholtz-Resonator ist.

30. Sicherheitsstützkörper nach einem der Ansprüche 14 bis 25, worin der Resonator ein Viertelwellen-Resonator ist.

31. Sicherheitsstützkörper nach Anspruch 30, worin die genannten Hohlräume c sich in Umfangsrichtung längs des Hauptkörpers des Stützkörpers über eine Strecke erstreckt, die im wesentlichen $\lambda/4$ entspricht.

32. Verwendung eines Sicherheitsstützkörpers (4) in einem Fahrzeugrad im Hohlraum C, der zwischen der Felge (2) und dem Luftreifen (3) des Rades gelegen ist, wobei der genannte Stützkörper (4) vorgesehen ist, um die Lauffläche des genannten Reifens (3) im Fall des Verlustes von dessen Aufpumpdruck von innen her abzustützen, um mindestens einen Teil der Wände eines Hohlraums c eines Resonators zu bilden, der im genannten Rad angebracht und dazu eingerichtet ist, um eine Frequenz der natürlichen Resonanz des genannten Hohlraums C abzuschwächen.

Figure 1

Figure 2a

Figure 2b

Figure 2c

Figure 2d

Figure 3

Figure 4

Figure 5

Figure 6

Figure 7

Figure 8-a

Figure 8-b

Figure 8-c

Figure 8-d

Figure 8-e

Figure 8-f

Figure 9-a

Figure 9-b

Figure 9-c

Figure 9-d

Figure 10

Figure 11

Figure 12a

Figure 12b

Figure 13a

Figure 13b

Figure 13c

Figure 13d